(19) Europäisches Patentamt
European Patent Office
Office européen des brevets

(11) Veröffentlichungsnummer : **0 175 803**
**B1**

(12) # EUROPÄISCHE PATENTSCHRIFT

(45) Veröffentlichungstag der Patentschrift : **07.09.88**

(51) Int. Cl.⁴ : **G 01 M 1/02**, G 01 M 1/24

(21) Anmeldenummer : **84111394.7**

(22) Anmeldetag : **25.09.84**

(54) **Verfahren zur Berücksichtigung von Lageungenauigkeiten sowie Vorrichtung hierzu.**

(43) Veröffentlichungstag der Anmeldung : **02.04.86 Patentblatt 86/14**

(45) Bekanntmachung des Hinweises auf die Patenterteilung : **07.09.88 Patentblatt 88/36**

(84) Benannte Vertragsstaaten : **DE FR GB IT**

(56) Entgegenhaltungen :
**DE-A- 2 823 219**
**DE-A- 2 847 643**
**DE-A- 3 108 890**

(73) Patentinhaber : **CARL SCHENCK AG**
**Landwehrstrasse 55 Postfach 40 18**
**D-6100 Darmstadt (DE)**

(72) Erfinder : **Schönfeld, Harald, Ing. grad.**
**Aumühlenweg 1**
**D-6100 Darmstadt (DE)**

(74) Vertreter : **Dallhammer, Herbert, Dipl.-Ing.**
**CARL SCHENCK AG Patentabteilung Postfach 4018**
**Landwehrstrasse 55**
**D-6100 Darmstadt (DE)**

**EP 0 175 803 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Berücksichtigung von Lageungenauigkeiten von an einem Rotore befindlichen Aufnahmen für bei einer späteren Montage zu montierende massenbehaftete Teile in Bezug auf die ideale Lage der Aufnahmen am Rotor beim Auswuchten des Rotors, insbesondere von Kurbelzapfen an einer Kurbelwelle.

Zum Simulieren des Massenanteils des später an den einzelnen Kurbelzapfen angelenkten Kurbel-triebes, bestehend aus Pleuel, Kolben, Kolbenbolzen, Kolbenringe, werden sogenannte Meisterringe auf jeden Kurbelzapfen aufgeklemmt (C.F. Bateman, Crankshaft Balancing, Automobile Engineer, Febr. 1966). Weicht in diesem Falle die Anordnung der Kurbelzapfen von einer idealen Anordnung der Kurbelzapfen an der Kurbelwelle ab, beispielsweise bei einem V-8-Motor dergestalt, daß der Winkelabstand der Achsen der Kurbelzapfen voneinander nicht mehr 90°, sondern einen davon abweichenden Wert besitzt, so wird durch die Meisterringe diese Abweichung mit berücksichtigt. Gleiches gilt für den radialen Abstand der Achsen der Kurbelzapfen von der Achse der Kurbelwelle. Auch diese Fehler werden durch die Meisterringe mit berücksichtigt und treten später bei der Montage des Kurbeltriebs nicht mehr in Erscheinung.

Das Anbringen und Abnehmen derartiger Meisterringe vor und nach dem Unwuchtmeßlauf der Kurbelwelle ist sehr zeitaufwendig. Deshalb wurden Auswuchtmaschinen erstellt, bei denen zur Berücksichtigung der Einflüsse der exzentrischen Lage der Kurbelzapfen an der Kurbelwelle Massen, Zusatzunwuchtmassen, außerhalb der Kurbelwellen an der Antriebsspindel für die Kurbelwelle in entsprechender Winkellage zueinander und in einem entsprechenden Abstand von der Antriebsspindelachse angeordnet sind, um die auftretenden Unwuchten zu beseitigen (H. Hack et al, Auswuchttechnische Fragen im Automobilbau, Automobil Industrie, 11-Jg, Nr-2/April 1966). Derartige Zusatzunwuchtmassen werden nach den Nennmaßen, den Idealwerten, der Winkelanordnung der einzelnen Kurbelzapfen und deren Exzentrizität bestimmt. Bei symmetrisch angeordneten Kurbelzapfen ist die Anbringung derartiger Zusatzunwuchtmassen nicht erforderlich, da sich die Wirkung der Idealwerte auf Grund der Symmetrie kompensiert. Läuft eine derart kompensierte Kurbelwelle um, so entsteht zwangsläufig durch die Abweichung der Ist-Werte von Idealwerten der Kurbelwelle eine Fehlerunwucht, die sich bei einem späteren Zusammenbau der Kurbelwelle mit dem Kurbeltrieb schädlich auswirkt. Diese Fehlerunwucht kann die zugelassene Auswuchttoleranz überschreiten.

Dies gilt nicht nur für Kurbelwellen, sondern auch für andere Rotoren, an welchen in vorgegebener geometrischer Lage zur Rotationsachse und geometrisch vorgegebener Lage zueinander am Umfang eines Grundkörpers Aufnahmen angeordnet sind, die später zur Befestigung von daran anzuordnenden Bauteilen dienen und die zufolge ihrer Herstellung gegenüber den geometrisch vorgegebenen theoretischen Lagen eine Abweichung aufweisen. Ausgehend hiervon liegt der vorliegenden Erfindung die Aufgabe zugrunde, derartige Fehlerunwuchten zu vermeiden, ohne den Aufwand des Anbringens der Meisterringe sowie deren Lagerhaltung. Diese Aufgabe wird durch das kennzeichnende Merkmal des Verfahrensanspruchs 1 gelöst. Durch die Feststellung der Differenz zwischen geometrischer Soll- und Ist-Lage ist die Wirkung dieser Abweichung im Hinblick auf ihren Einfluß auf die Unwucht des nicht fertig montierten Rotors getrennt von der im Rotor vorhandenen tatsächlichen Unwucht feststellbar und durch Addition zu der gefundenen Unwucht eliminierbar, so daß beim fertig montierten Kurbeltriebwerk keine Fehlerunwuchten auftreten.

Die in Anspruch 2 angegebene Ausgestaltung ist insbesondere auf das Auswuchten von Kurbelwellen oder andere langgestreckte Rotationskörper gerichtet, die an ihrem Umfang Aufnahmen für später zu montierende Bauteile besitzen. Sie lehrt, die mehreren Abweichungen als eine resultierende Wirkung zu der gefundenen Unwucht zu addieren.

Als eine besondere Ausgestaltung des Erfindungsgegenstandes wird gemäß Kennzeichen des Anspruchs 3 vorgeschlagen, dieselbe Meßrichtung für die Bestimmung der Abweichung, also für die geometrische Messung und für die Bestimmung der im Körper enthaltenen Unwucht zu benutzen. Hiermit wird ein zusätzliches Übertragen der aus der geometrischen Abweichung hervorgerufenen Wirkung auf die in einer anderen Richtung, beispielsweise einer Richtung eines rechtwinkligen Koordinatensystems, gewonnenen Unwuchtwirkung vermieden.

In Anspruch 4 wird eine Messvorrichtung zur Durchführung des Verfahrens unter Schutz gestellt, bei dem, ohne Umrechnung auf Idealwerte, eine genaue Berücksichtigung der Fehlerunwuchten hervorrufenden Lageungenauigkeiten erfolgt.

Die in Anspruch 5 unter Schutz gestellte Meßvorrichtung lehrt, wie die gefundenen Werte, die zu Fehlerunwuchten führen würden, wenn sie in einem Bezugssystem gemessen werden, das abweicht vom Bezugssystem, in dem die Unwucht des Rotors bestimmt wird, berücksichtigt werden können. Anspruch 6 zeigt eine Meßvorrichtung mit einem Bezugssystem, das zwar einen Meßtaster mehr benötigt, jedoch universell an die Bezugssysteme für das Auswuchten der Rotoren angepaßt werden kann.

In der nachfolgenden Zeichnung wird die Erfindung näher erläutert.

Es zeigen :

Fig. 1 schematisch dargestellt eine Meßvorrichtung zur Gewinnung und Weiterverarbeitung der Abweichungen in Ansicht und Draufsicht

Fig. 2 eine Meßvorrichtung mit einem ersten Bezugssystem zur Bestimmung der Abweichungen und

Fig. 3 eine Meßvorrichtung mit einem zweiten Bezugssystem zur Bestimmung der Abweichungen.

In den Figuren werden dieselben Bauteile mit denselben Bezugsziffern bezeichnet.

Ein in einer Meßlagerung 1 eingelagerter Rotor, beispielsweise eine Kurbelwelle 2 — anstelle der dargestellten Kurbelwelle eines V-8-Motors können auch Kurbelwellen anderer Bauart treten, oder andere Rotoren mit Aufnahmen — soll an ihren Kurbelzapfen 4, 5, 6, 7 in Bezug auf eine Lageabweichung der Kurbelzapfen in radialer Richtung und in Umfangsrichtung von einer Soll-Lage untersucht werden. Die geometrische Ist-Lage wird über Meßtaster 8, 9, 10, 11, 12, 13, 14 ermittelt und Vergleichsschaltungen 15 bis 21 zugeführt. Bei den Meßtastern können alle für Längenmessungen geeigneten Taster verwendet werden, die auf beispielsweise mechanischer, optischer oder elektrischer Basis berührend oder berührungslos arbeiten.

In diesen Vergleichsschaltungen 15 bis 21 werden die Differenz zwischen der Soll-Lage und der Ist-Lage des einzelnen Kurbelzapfens festgestellt, diese Differenzen auf eine linke Ausgleichsebene 30 und eine rechte Ausgleichsebene 31 aufgeteilt und aufaddiert, so daß beispielsweise über die Komponentenleitung 22 alle vertikalen Differenzwerte für die linke Ausgleichsebene 30 und über die Komponentenleitung 23 alle vertikalen Komponenten der rechten Ausgleichsebene 31 einem Komponentenspeicher 24 für die vertikalen Komponenten der linken Ausgleichsebene 30 und einem Komponentenspeicher 25 für die vertikalen Komponenten der Ausgleichsebene 31 zugeführt werden. Über weitere Komponentenleitungen 28, 29 werden die horizontalen Komponenten für die linke Ausgleichsebene 30 (weitere Komponentenleitung 28) und die horizontale Komponente der rechten Ausgleichsebene 31 (weitere Komponentenleitung 29) weiteren Komponentenspeichern 26, 27 für jede Ebene getrennt zugeführt.

Falls die geometrische Vermessung in der Meßlagerung 1 in einem Bezugssystem erfolgte, das nicht dem Bezugssystem für die Unwuchtmessung des Rotors, in diesem Falle der Kurbelwelle 2 entspricht, sind für die rechte Ausgleichsebene 31 und für die linke Ausgleichsebene 30 im Verlauf der Komponentenleitung 22 und der weiteren Komponentenleitung 28 bzw. im Verlauf der Komponentenleitung 23 und der weiteren Komponentenleitung 29 Transformationsschaltungen 32, 33 vorgesehen, in der die Differenzwerte auf das Bezugssystem für die Messung der Unwucht des Rotors transformiert werden.

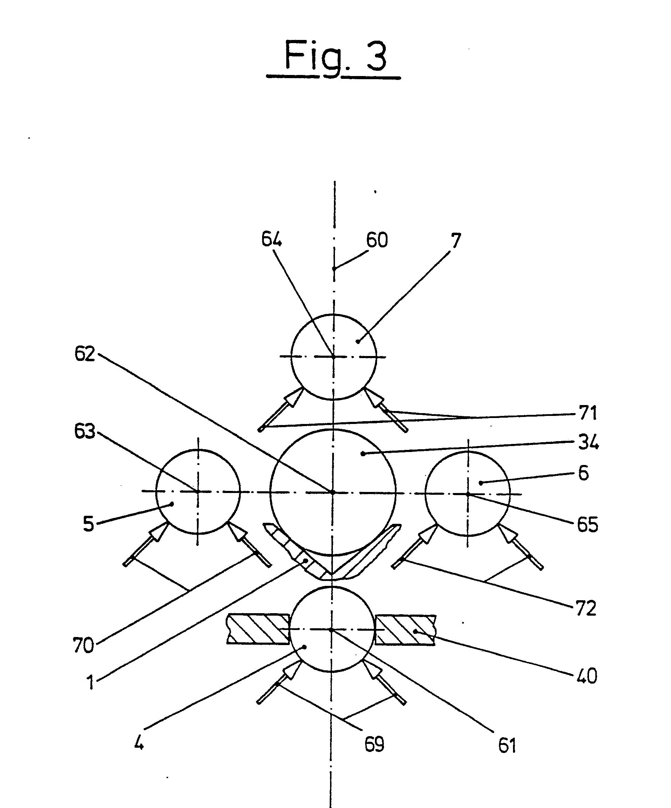

Die Meßlagerung 1 stützt den Rotor an derselben Stelle ab, an der er später in einer nicht dargestellten Auswuchtmaschine abgestützt wird. Es könnte sich bei der Meßlagerung 1 insoweit auch um die Lagerung der Auswuchtmaschine für den zu untersuchenden Rotor handeln, wobei dann in einem ersten Arbeitsgang bei stehender Auswuchtmaschine und in diesem Falle festgeklemmtem Kurbelzapfen 4 (vgl. Fig. 2 und 3) die Meßtaster 8 bis 14 jeweils den entsprechenden Kurbelzapfen 4 bis 7 horizontal und vertikal abtasten.

Für diesen Fall ist es von Vorteil, wenn das Bezugssystem für die geometrische, also die statische Messung, gleich ist dem Bezugssystem für die dynamische Unwuchtmessung. Es können dann hierbei keine Übertragungsfehler auftreten, wenn die Meßlagerung 1 gleichzeitig die Auswuchtmaschinenlagerung darstellt.

Nachdem die Differenzwerte nach Komponenten in den Komponentenspeichern 24, 25 und den weiteren Komponentenspeichern 26, 27 gespeichert sind, wird nach Entfernen der Meßtaster 8 bis 14 und Freigeben des Kurbelzapfens 4 aus einer Arretierung 40 der Unwuchtmeßlauf für den Rotor begonnen. Hierbei werden über nicht dargestellte Schwingungsumformer, die in den Lagerebenen 34, 35 der Auswuchtmaschine auftretenden Unwuchtschwingungen aufgenommen, in einer nicht dargestellten Meßschaltung umgerechnet auf die rechte Ausgleichsebene 31 und die linke Ausgleichsebene 30 einem Unwuchtmeßgerät 36 zugeführt und dort in Komponenten für die linke Ausgleichsebene 30 und die rechte Ausgleichsebene 31 gespeichert.

Über eine Zuleitung 41 werden an einem Verknüpfungspunkt 43 beispielsweise die Vertikalkomponenten aus der Unwuchtmessung des Rotors bezogen auf die linke Ausgleichsebene 30 und die Vertikalkomponenten der Differenz zwischen Soll- und Ist-Wert, ebenfalls bezogen auf die linke Ausgleichsebene 30, aus dem Komponentenspeicher 24 verknüpft. Am Verknüpfungspunkt 44 werden die über die Zuleitung 42 kommenden Horizontalkomponenten der Unwuchten des Rotors bezogen auf die linke Ausgleichsebene 30 und die Horizontalkomponenten der Differenz zwischen Soll- und Ist-Wert, ebenfalls bezogen auf die linke Ausgleichsebene 30, aus dem Komponentenspeicher 26 verknüpft. In derselben Weise werden an den Verknüpfungspunkten 47, 48 über die Zuleitungen 45, 46 kommenden Vertikal- und Horizontalkomponenten, bezogen auf die rechte Ausgleichsebene 31, mit den aus den Komponentenspeichern 25, 27 kommenden Komponenten der Differenz zwischen Soll- und Ist-Wert verknüpft. Auf den Anzeigeleitungen 49, 50, 51, 52 stehen nunmehr die auf die linke Ausgleichsebene 30 und rechte Ausgleichsebene 31 bezogenen korrigierten Unwuchtwerte getrennt in Komponenten an und werden in einem Unwuchtanzeigegerät 53 angezeigt. Hierzu ist es erforderlich, daß die in den Komponentenspeichern 24 bis 27 anstehendenen, die geometrische Abweichung darstellenden Komponenten in nach diesen Komponentenspeichern angeordneten Schaltungen (Wandler 54, 55, 56, 57) als Unwuchtwirkungen dargestellt werden ; die Wandler (54, 55, 56, 57) berücksichtigen den beispielsweise aus Kap. 1.1.3 des Buches « K. Federn : Auswuchttechnik, Springer — Verlag 1977 » bekannten Zusammenhang zwischen geometrische Abweichung und Unwuchtwirkung ; Diese Ergebnisse werden dann den Verknüpfungspunkten 43, 44 und 47, 48 zugeführt und dort zu den über die Zuleitungen 41, 42 und 45, 46 kommenden Komponenten der Unwuchtwirkungen addiert.

Das in Fig. 2 dargestellte Bezugssystem zur Bestimmung der Abweichungen zeigt in vereinfachter Darstellung die Kurbelwelle 2 im Querschnitt, wobei der Kurbelzapfen 4 in der Arretierung 40 eingeklemmt ist. Die Meßlagerung 1 unterstützt die Kurbelwelle 2 im Bereich des linken Lagerzapfens als Lagerebene 34. Die Achse 61 des Kurbelzapfens 4 und die Rotationsachse 62 der Kurbelwelle liegen in einer Vertikalebene 60. Um nunmehr die Radiusabweichung vom Soll-Wert festzustellen, werden die Meßtaster 8 und 11 an den Kurbelzapfen 4 und 7 vertikal in Richtung auf die Rotationsachse des jeweiligen Kurbelzapfens am Umfang des Kurbelzapfens angelegt und somit ein Maß für die Verlagerung der jeweiligen Rotationsachse des Kurbelzapfens, welche als Schwerpunktlage dient, gewonnen. Es ist verständlich, daß zu diesem gewonnenen Maß jeweils noch der Kurbelzapfenradius mitberücksichtigt werden muß ; nachdem es sich bei den Kurbelzapfen um durchmessergenaue Bauteile handelt, ist eine Berücksichtigung der Toleranzen des einzelnen Kurbelzapfens nicht erforderlich. Hingegen ist bei anderen Rotoren, bei denen die Aufnahmen nicht, wie im Ausführungsbeispiel, ausreichend durchmessergenau sind, eine zusätzliche Berücksichtigung des Abstandes der Symmetrieachse als Lage für den Schwerpunkt der Aufnahmen zu deren Außenkontur zu berücksichtigen. An den Kurbelzapfen 5 und 6 wird die Radiusabweichung mit Hilfe der Meßtaster 12 und 13 horizontal in Richtung auf die Rotationsachse dieser Kurbelzapfen bestimmt.

Der Winkelversatz des Kurbelzapfens 5 wird durch den Meßtaster 9 vertikal in Richtung auf die Rotationsachse dieses Kurbelzapfens bestimmt. Die Winkelabweichung des Kurbelzapfens 7 wird horizontal durch den Meßtaster 14 bestimmt und die Winkelabweichung des Kurbelzapfens 6 vertikal in Richtung auf die Rotationsachse dieses Kurbelzapfens durch den Meßtaster 10. Da in diesem Falle der Kurbelzapfen 4 als bezogener Zapfen verwendet wird, ist für diesen kein Winkelversatz zu bestimmen.

Bei dem in Fig. 3 dargestellten Bezugssystem ist ebenfalls ein Kurbelzapfen 4 in der Arretierung 40 gehaltert und die Lagerebene 34 in der Meßlagerung 1 eingelagert. Die Achse 61 und die Rotationsachse 62 befinden sich ebenfalls in der vertikalen Ebene 60, die Wirkrichtungen der Meßtaster jedoch in zur Vertikalebene 60 geneigten Ebenen, die sich jeweils in den Achsen 61, 63, 64 und 65 schneiden. Durch die Anordnung von Meßtasterpaaren 69, 70, 71, 72, die sich in der jeweiligen Achse schneiden, wird der jeweilige Versatz des Kurbelzapfens in radialer und Umfangsrichtung gemeinsam gemessen. In dem im Ausführungsbeispiel gemäß Fig. 3 dargestellten Bezugssystem schließen die Wirkrichtungen der Meßtasterpaare einen Winkel von 90° ein ; es ist jedoch auch jeder andere Winkel zwischen den Wirkrichtungen der Meßtasterpaare möglich. Damit ist es möglich, die Messung der Abweichung bereits in dem Bezugssystem zu messen, in welchen der Rotationskörper in Bezug auf seine Unwucht untersucht wird.

## Patentansprüche

1. Verfahren zur Berücksichtigung von Lageungenauigkeiten von an einem Rotor befindlichen Aufnahmen für bei einer späteren Montage zu montierende massenbehaftete Teile in Bezug auf die ideale Lage der Aufnahmen am Rotor, beim Auswuchten des Rotors, insbesondere von Kurbelzapfen an einer Kurbelwelle, dadurch gekennzeichnet, daß die Wirkung der Differenz zwischen Ist- und Soll-Lage der Aufnahme beim Auswuchten des nur mit den Aufnahmen versehenen Rotors zu der gefundenen Unwucht addiert wird.

2. Verfahren nach Anspruch 1, dadurch gekennzeichnet, daß die jeweiligen Wirkungen der Differenzen zwischen jeweiligem Ist- und Soll-Wert mehrerer Aufnahmen beim Auswuchten zusammengefaßt als eine resultierende Wirkung zu der gefundenen Unwucht addiert wird.

3. Verfahren nach Anspruch 1 und/oder 2, dadurch gekennzeichnet, daß die Bestimmung der Differenz zwischen Ist- und Soll-Lage der Aufnahme und die Bestimmung der Unwucht in einem gemeinsamen Bezugssystem erfolgen.

4. Meßvorrichtung zur Durchführung des Verfahrens nach einem oder mehreren der Ansprüche 1 bis 3 mit einem mit Aufnahmen, insbesondere mit Kurbelzapfen, versehenen Rotor, einer Auswuchtmaschine, einem Unwuchtmeßgerät mit einer Ebenentrennung und einem Unwuchtanzeigegerät für die in Ausgleichsebenen zu beseitigende Unwucht, dadurch gekennzeichnet, daß

Meßtaster zur Ermittlung der Ist-Werte der Lage der Aufnahmen in radialer und Umfangsrichtung vorgesehen sind,

jedem Meßtaster eine Vergleichsschaltung (15 bis 21) nachgeschaltet ist, in welcher die Differenz zwischen Aufnahme Ist-Wert und Aufnahme Soll-Wert in radialer und Umfangsrichtung gebildet wird und in welcher die Differenz in auf die linke Ausggleichsebene 30 und die rechte Ausgleichsebene 31 entfallenden Komponenten aufgespalten wird,

je Ebene die Komponenten unter Beachtung ihres Vorzeichens addiert und in je einem Speicher (24 bzw. 26 bzw. 25 bzw. 27) gespeichert werden und

die Unwuchtwirkung der in den Speichern enthaltenen, die geometrische Abweichung darstellenden Summen in je einer Schaltung (Wandler 54 bzw. 56 bzw. 57) bestimmt wird,

dieses Ergebnis zu dem in Ausgleichsebenen (30, 31) und je Ebene in Komponenten aufgetrennten Ergebnis der Unwuchtmessung des Rotors 2 addiert wird und

im nachgeschalteten Unwuchtanzeigegerät (53) die so korrigierte, am Rotor (2) zu beseitigende Unwucht für jede Ausgleichsebene (30, 31) getrennt in Komponenten angezeigt wird.

5. Meßvorichtung nach Anspruch 4, dadurch gekenzeichnet, daß bei einer Messung der geometrischen Abweichungen der Ist- von den Soll-Maßen in einem vom Winkelsystem der Unwuchtmessung verschiedenen Winkelsystem eine Transformationsschaltung (32, 33) für die Differenzwerte vor einer Addition mit den Unwuchtwerten des Rotors (2) vorgesehen ist.

6. Meßvorichtung nach einem oder beiden der vorhergehenden Ansprüche 4 und 5, dadurch gekennzeichnet, daß

eine Aufnahme (4) als Bezug festgehalten wird

alle Aufnahmen (4, 5, 7, 6) mittels erster Meßtaster unter einem in einer orthogonalen Ebene zu der Ebene (60), die die Rotationsachse (62) des Rotors und die Achse (61) der bezogenen Aufnahme beinhaltet, liegenden Winkel und mittels zweiter Meßtaster, deren Meßrichtung ebenfalls in derselben orthogonalen Ebene verläuft, und die einen Winkel mit der Meßrichtung der ersten Meßtaster, insbesondere 90°, besitzen, abgetastet werden und

die Meßrichtungen der für jede Aufnahme vorgesehenen beiden Meßtaster (69, 70, 71, 72) sich in der jeweiligen Achse (61, 63, 64, 65) der Aufnahme (4, 5, 7, 6) schneiden.

**Claims**

1. A method of allowing for inaccuracies in position of carrying means on a rotor for massy parts to be mounted during a later assembly in relation to the ideal position of the carrying means on the rotor, during the balancing of the rotor, particularly of crankpins on a crankshaft, characterised in that the effect of the difference between actual and desired position of the carrying means is added to the out-of-balance found during the balancing of the rotor provided only with the carrying means.

2. A method according to Claim 1, characterised in that the respective effects of the differences between the respective actual and desired value of a plurality of carrying means are combined during the balancing and added as a resulting effect to the out-of-balance found.

3. A method according to Claim 1 and/or 2, characterised in that the determination of the difference between actual and desired position of the carrying means and the determination of the out-of-balance are effected in a common reference system.

4. A measuring device for carrying out the method according to one or more of Claims 1 to 3, having a rotor provided with carrying means, particularly with crank-pins, a balancing machine, an out-of-balance measuring instrument with a separation of planes and an out-of-balance indicating device for the out-of-balance to be eliminated in balancing planes, characterised in that

measuring sensors are provided to detect the actual values of the position of the carrying means in the radial and circumferential direction,

each measuring sensor is followed by a comparison circuit (15 to 21) in which the difference is formed between the carrying means actual value and the carrying means desired value in the radial and circumferential directions and in which the difference is split up into components falling to the left-hand balancing plane 30 and the right-hand balancing plane 31,

for each plane, the components are added taking their sign into consideration, and are each stored in a separate store (24, 26, 25 and 27 respectively) and

the out-of-balance effect of each of the sums contained in the stores and representing and geometrical deviation is determined in a separate circuit (converters 54, 55, 56 and 57 respectively),

this result is added to the result of the out-of-balance measurement of the rotor (2) separated into balancing planes (30, 31) and each plane separated into components, and

in the following out-of balance indicating device (52), the out-of-balance thus corrected and to be eliminated at the rotor (2) is indicated separated into components for each balancing plane (30, 31).

5. A measuring device according to Claim 4, characterized in that when the geometrical deviations of the actual dimensions from the desired dimensions are measured in a system of angles different from the system of angles of the out-of-balance measurement, a transformation circuit (32, 33) for the difference values is provided before addition to the out-of-balance values of the rotor (2).

6. A measuring device according to either one or both of the preceding Claims 4 and 5, characterised in that

one carrying means (4) is kept as a reference

all the carrying means (4, 5, 7, 6) are scanned by means of first measuring sensors at an angle lying in an orthogonal plane to the plane (60) which contains the axis of rotation (62) of the rotor and the axis (61) of the carrying means in question and by second measuring sensors, the measuring direction of which likewise extends in the same orthogonal plane and which are at an angle to the measuring direction of the first measuring sensors, particularly 90° and

the measuring directions of the two measuring sensors (69, 70, 71, 72) provided for each carrying means intersect one another in the respective axes (61, 63, 64, 65) of the carrying means (4, 5, 7, 6).

**Revendications**

1. Procédé de prise en compte d'inexactitudes de position de logements se trouvant sur un rotor, destinés à des composants alourdis à monter au cours d'un montage ultérieur par rapport à la position idéale des logements sur le rotor, lors de l'équilibrage du rotor, en particulier de manetons sur un vilebrequin, caractérisé en ce qu'on ajoute l'effet de la différence entre la position réelle et la position prescrite du logement, lors de l'équilibrage du rotor comportant seulement les logements, au déséquilibre trouvé.

2. Procédé selon la revendication 1, caractérisé en ce que l'on ajoute au déséquilibre trouvé les effets respectifs des différences entre la valeur réelle et la valeur prescrite de chacun de plusieurs logements, lors de l'équilibrage groupés sous la forme d'un effet résultant.

3. Procédé selon la revendication 1 et/ou 2, caractérisé en ce que l'on effectue la détermination de la différence entre la position réelle et la position prescrite du logement et la détermination du déséquilibre dans un système de référence commun.

4. Dispositif de mesure pour mettre en œuvre le procédé selon une ou plusieurs des revendications 1 à 3, avec un rotor comportant des logements, en particulier un vilebrequin, une machine d'équilibrage, un appareil de mesure des déséquilibres avec une décomposition selon des plans et un appareil indicateur pour le déséquilibre à supprimer dans des plans d'équilibrage, caractérisé en ce que :

des palpeurs de mesure pour déterminer les valeurs réelles de la position des logements en direction radiale et en direction périphérique sont prévus ;

chaque palpeur de mesure est suivi par un montage comparateur (15 à 21) dans lequel la différence entre la valeur réelle de la position du logement et la valeur prescrite de la position du logement en direction radiale et en direction périphérique est formée et dans lequel la différence est décomposée en composantes suivant le plan d'équilibrage de gauche 30 et le plan d'équilibrage de droite 31,

pour chaque plan, les composantes sont ajoutées en tenant compte de leur signe et elles sont mémorisées dans une mémoire respective (24, respectivement 26, respectivement 25, respectivement 27), et

l'effet de déséquilibre des sommes représentant l'écart géométrique contenues dans les mémoires est déterminé dans un montage respectif (transducteurs 54, respectivement 55, respectivement 56, respectivement 57),

ce résultat est ajouté au résultat de la mesure de déséquilibre du rotor (2) décomposé suivant les plans d'équilibrage (30, 31) et en composantes dans chaque plan, et

dans l'indicateur de déséquilibre (53) monté en aval, le déséquilibre à supprimer sur le rotor (2), ainsi corrigé, est indiqué séparé en composantes pour chaque plan d'équilibrage (30, 31).

5. Dispositif de mesure selon la revendication 4, caractérisé en ce que, dans le cas d'une mesure des écarts géométriques des cotes réelles par rapport aux cotes prescrites dans un système angulaire différent du système angulaire de la mesure de déséquilibre, un montage de transformation (32, 33) pour les différences est prévu avant une addition avec les valeurs de déséquilibre du rotor (2).

6. Dispositif de mesure selon l'une ou chacune des deux revendications précédentes 4 et 5, caractérisé en ce que :

un logement (4) est fixé en tant que référence ;

que tous les logements (4, 5, 7, 6) sont explorés au moyen de premiers palpeurs de mesure sous un angle se trouvant dans un plan orthogonal au plan (60) qui contient l'axe de rotation (62) du rotor et l'axe (61) du logement de référence, et au moyen de seconds palpeurs dont la direction de mesure se trouve également dans le même plan orthogonal, et qui présentent un angle avec la direction de mesure des premiers palpeurs en particulier de 90°, et

les directions de mesure des deux palpeurs de mesure (69, 70, 71, 72) prévus pour chaque logement se coupent sur l'axe respectif (61, 63, 64, 65) de chacun des logements (4, 5, 7, 6).

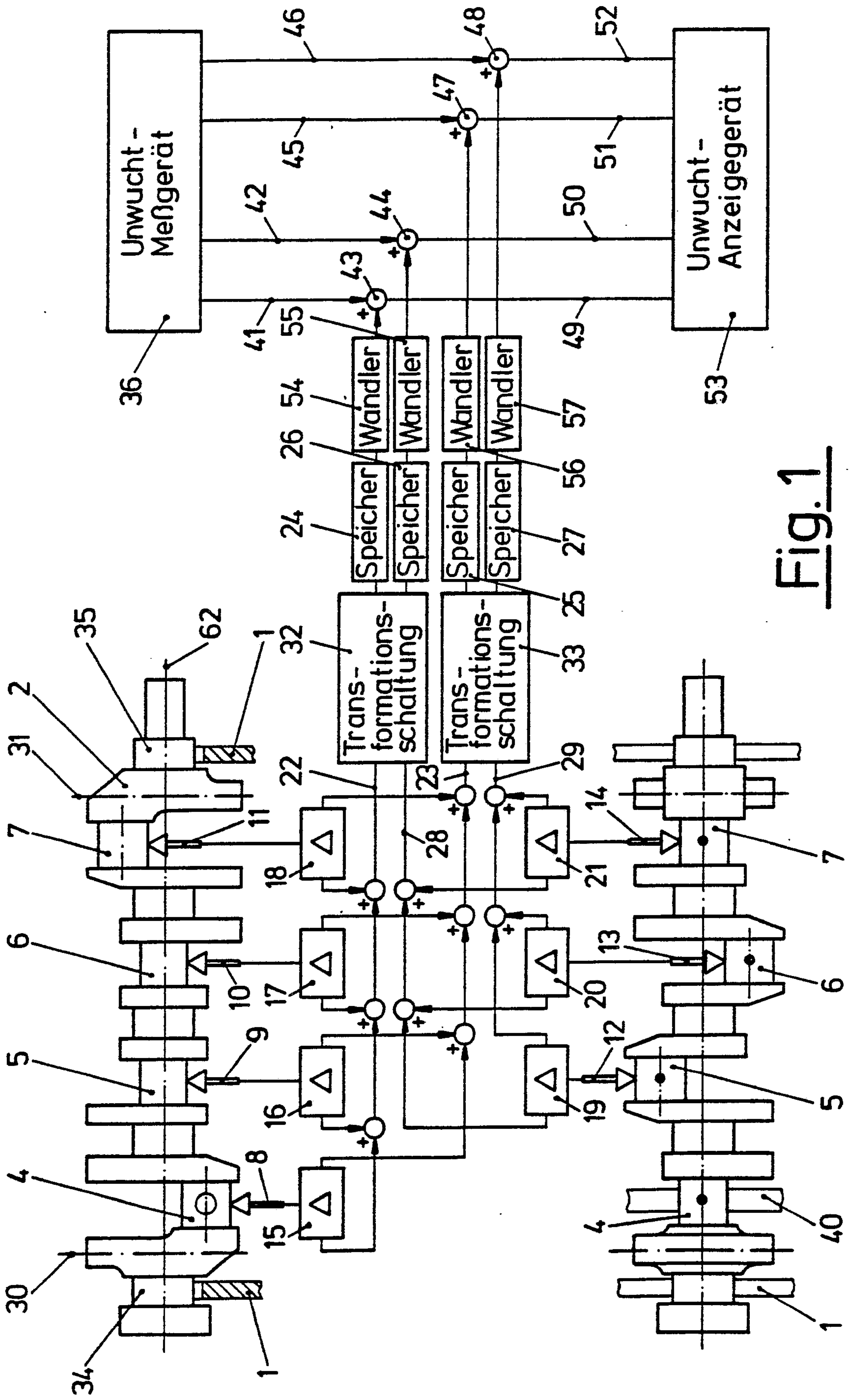
Unwucht-Meßgerät
Unwucht-Anzeigegerät
Speicher
Speicher
Speicher
Speicher
Wandler
Wandler
Wandler
Wandler
Transformationsschaltung
Transformationsschaltung
1 2 4 5 6 7 8 9 10 11 12 13 14 15 16 17 18 19 20 21 22 23 24 25 26 27 28 29 30 31 32 33 34 35 36 40 41 42 43 44 45 46 47 48 49 50 51 52 53 54 55 56 57 62

Fig. 1

Fig. 2

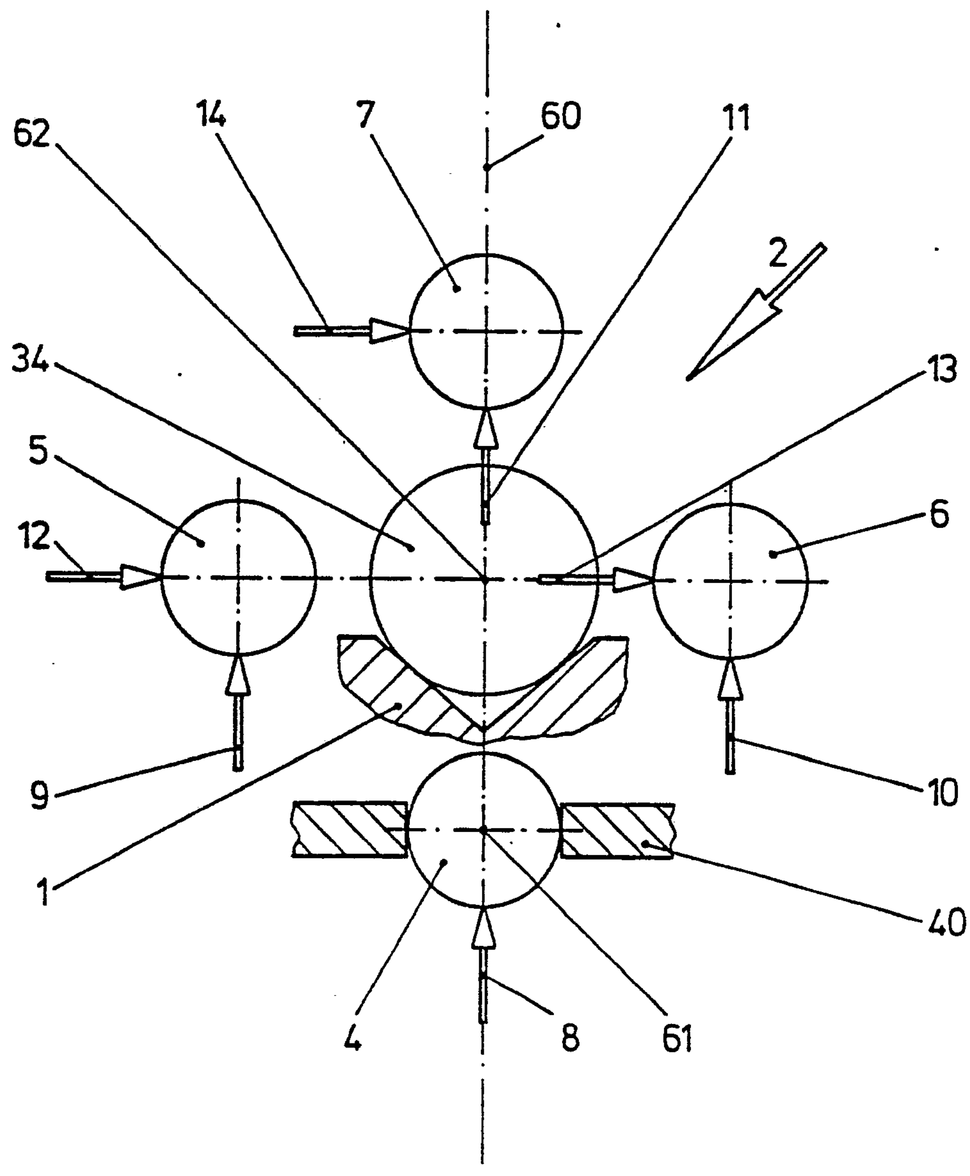

Fig. 3